# EUROPEAN PATENT APPLICATION

(11) **EP 2 875 801 A1**
(43) Date of publication of application: **27.05.2015**
(21) Application number: 14194177.3
(22) Date of filing: 20.11.2014
(51) Int. Cl.: A61G 5/06, A61G 5/10, B62B 5/06

(54) **Improvements to attachment device and method of use thereof**

(30) Priority: 20.11.2013 GB 201320519
(71) Applicant: RGL Innovations Limited, Leeds LS25 1LJ (GB)
(72) Inventor: Rhodes, Malcolm, Leeds, West Yorkshire LS25 1LJ (GB)
(74) Representative: Stephenson, Philip

(57) **Abstract**

A device for attaching at least one extension member to an article such as a wheelchair or the like. The device including at least one clamp means and at least one shoe means where at least part of the shoe means is positioned and/or secured substantially between the clamp means and the article in use and at least part of the device includes an extension member and/or is adapted to be connected to an extension member in use. The shoe means includes at least one channel or recess wherein said channel or recess includes one or more formations and/or a substantially planar surface.

## Description

The present invention relates to a device and method of using the same to attach additional members, such as handles or handle extensions, to articles.

Although the following description refers exclusively to such articles being wheelchairs, the skilled person will appreciate that the device could be used with other suitable articles such as sack trolleys and/or the like.

The safe evacuation of people with disabilities, particularly wheelchair users, is currently impossible when evacuating up or down stairs and carrying the evacuee whilst still in his/her own wheelchair is involved. Typically, there is a need for a physical transfer of the wheelchair user from his/her wheelchair into another article or chair. This task falls within the highest risk ranking for any manual handling operation under Health and Safety, Manual Handling Operations Regulations 1992. A comprehensive risk assessment of the manual handling operation has been carried out. This poses serious concerns for the Health and Safety Executive ergonomists who have carried out in depth research in to the problem, but who as yet, do not have a solution. The lowering of a wheelchair down stairs falls in the highest risk category due to the position that must be adopted by the person lowering the wheelchair, as not only does the wheelchair have to be tipped backwards causing the push handles to rotate in a downward arc, but due to the position of the wheelchair on the stairs the operator must be at least two steps behind and therefore two steps above the wheelchair. The result is a stooping position of at least 60 cm whilst attempting to control a very heavy and unstable load, held far away from the body with extended arms. In addition, The Regulatory Reform (Fire Safety Order) 2005 now requires that in an emergency people must be able to be evacuated "away from the building, to a place of safety". This is not possible with evacuation chairs currently in use to descend stairs as they are not designed for onward evacuation away from the building. Neither is it possible to use evacuation chairs for onward evacuation if the evacuation route is other than level and clear of even small obstructions, as a wheelchair with very small wheels can not traverse uneven or obstacle strewn terrain. The fire risk assessment - supplementary guide for the evacuation of disabled people clearly states that an evacuation plan must be in place that does not require the intervention of the Fire and Rescue Services. This puts the onus of evacuation on untrained personnel, who as employees should not be asked to undertake dangerous manual handling operations.

Currently available equipment i.e. evacuation chairs, rely on the evacuee being able to transfer from his/her own wheelchair into the device with little or no assistance and they are therefore not suitable for the evacuation of people who cannot transfer unaided. For wheelchair users who can not transfer unaided the use of evacuation chairs relies on a dangerous manual handing operation carried out by untrained personnel. This can lead to further injury of the wheelchair user due to unknown medical conditions such as brittle bone disease where serious injury could be caused unwittingly, cerebral palsy where the stress can bring on spasticity of the muscles making a physical transfer impossible, or post polio syndrome where extreme pain can be caused by lifting. Due to other medical conditions many wheelchair users also need a colostomy bag. These problems are acknowledged in the present UK government document Fire Safety Risk Assessment Supplementary Guide: Means of Escape for Disabled People.

The applicant's co-pending application WO2013/057510 discloses a solution to the abovementioned problem.

It is therefore an aim of the present invention to provide an improved device that addresses the abovementioned problems.

It is a further aim of the present invention to provide a method of using an improved device that addresses the abovementioned problems.

It is a yet further aim of the present invention to provide a device and a method of use of the same that enables the safe movement of wheelchairs and users thereof up and/or down stairs and/or other such uneven surfaces in their own chairs.

In a first aspect of the invention there is provided a device for attaching at least one extension member to an article in use, said device including at least one clamp means and at least one shoe means where at least part of the shoe means is positioned and/or secured substantially between the clamp means and the article in use and at least part of the device includes an extension member and/or is adapted to be connected to an extension member in use, said shoe means includes at least one channel or recess wherein said channel or recess includes one or more formations and/or a substantially planar surface.

Typically the formations reduce or at least narrow in part the width and/or diameter of the channel or recess. Preferably the formations are indentations. Further preferably the indentations are substantially V-shaped.

In one embodiment the formations comprise at least a pair of indentations and/or planar surfaces substantially arranged at an angle to one another to form a V-shape.

Typically the channel or recess is substantially cylindrical, semi-cylindrical and/or U-shaped.

In one embodiment at least a portion of the channel or recess is V-shaped. Typically, the V-shaped portion is formed by one or more indentations and/or planar surfaces.

In one embodiment most or substantially all of the channel or recess is V-shaped.

In one embodiment the channel or recess includes at least one U-shaped portion and at least one V-shaped portion.

Preferably the article is a wheeled article. Further preferably the article is a wheelchair. Typically the extension member is an extension piece or pole which can be used as a handle or handle extension.

Further typically, the device is attached to the portion of the wheelchair adjacent to the handle. This portions of the wheelchair is usually a curved handle bar or knuckle portion of the same. Preferably the extension member extends from the wheelchair in an upward direction.

Preferably the device is attached to any one or any combination of the handle stem, the curved knuckle portion and/or substantially adjacent to the handle portion of a wheeled article in use.

Typically at least the channel or recess portion of the shoe means is shaped to conform with and/or follow the shape of at least part of the handle stem, curved knuckle portion and/or substantially adjacent to the handle portion in use.

Further typically the channel or recess is shaped to receive, abut, correspond and/or otherwise be similar to at least part of a handle, or portion of the article adjacent to a handle portion, to which the device is attached in use.

In one embedment at least part of the channel or recess is curved and/or follows an arcuate or non-linear path when viewed along the latitudinal axis. Typically the channel or recess is substantially L-shaped. Further typically the channel or recess conforms or substantially follows at least part of the shape of a wheelchair handle stem and/or handle extending therefrom.

In one embodiment the clamp means and shoe means are detachably attached together. In an alternative embodiment the clamp means and shoe means are attached or integrally formed together. Typically the clamp means and shoe means are formed together such that the device is provided as a single unit or unitary body.

Typically when the clamp means and shoe means are detachably attached together the clamp means and/or the shoe means includes a recess and/or socket into which at least part of the other means is received. Further typically the recess or socket is substantially linear to prevent the members from slipping and/or rotating in a direction perpendicular to the axis of the recess or socket.

In one embodiment the clamp means attaches, secures, fastens and/or otherwise fixes the device and/or shoe means to the article in use. Typically the clamp means can be any one or any combination of clamps, shackles, belts, straps, ties, buckles, hook and loop type fastenings, screws, nuts and bolts and/or the like.

Thus, in the event the clamp means is not fully tightened, when the shoe means is worked loose, or is pulled away from the article, due to the one or more formations and/or substantially planar surfaces formed in the recess or channel, as well as the shape of the channel itself conforming to part of the article, the shoe means is forced outwards or away from the article, thereby effectively tightening the clamp.

In one embodiment the clamp means includes at least two clamp members. Typically the first clamp member is substantially linear and/or planar in shape. Further typically the second clamp member is substantially curved and/or arcuate is shape and/or U-shaped.

In one embodiment at least two clamp members are pivotally and/or hingedly connected together. Typically the ends and/or single edges of two clamp members are connected together. Further typically two clamp members are hingedly and/or pivotally connected together using a knuckle joint and/or the like such that the clamp means can be moved from a closed condition to an open condition and vice versa. For example the clamp can be swung open to the open condition, and/or wrapped around at least part of the article in use in the closed condition.

In one embodiment the clamp means includes at least one fastening means. Typically the fastening means includes any one or any combination of bolts, nuts, screws and/or the like. Further typically the fastening means fixes, closes, secures, abuts, seals and/or otherwise attaches the device and/or clamp means in position.

In one embodiment the one or more fastening means secures the clamp means in a closed condition.

In one embodiment the clamp means includes at least one indentation and/or recess shaped to receive the fastening means. Typically the recess prevents the clamp means form opening even if the fastening means is not tightened fully, becomes loose or loosens and/or the like.

In one embodiment the clamp means is substantially D shaped. Typically the hinge is formed in a corner of the D. Further typically the fastening means is formed in a corner or the D.

In one embodiment the shoe means conforms with and/or is attached to and/or abuts in use to an upper surface or top portion of a handle and/or article.

In one embodiment the second clamp member conforms with and/or is attached to and/or abuts in use to a lower surface or bottom portion of a handle and/or article. Typically the second attachment member extends and/or wraps around the bottom part of the handle in use.

Further typically the device can be attached and/or retrofitted to an article and/or substantially any manual wheelchair without modification of said chair and/or article.

In one embodiment the device includes at least one attachment means to attach the same to an extension member. Typically the extension member and/or the device includes at least one socket portion by which the same can be engaged and/or attached together.

In one the extension member is substantially elongate in shape. Typically the extension member extends from the device. Further typically the extension member extends from the device in a substantially upward direction.

In one embodiment the extension member includes at least one handle portion. Preferably the extension member includes two handle portions.

In one embodiment the at least the shoe means and an extension member are form a single body or unit.

In one embodiment the shoe means, extension means and/or clamp means form single body, unit or device. Typically at least part of the device is formed from engineered structural foam.

In a second aspect of the invention there is provided a carrying system for transporting wheeled articles over uneven ground, stairs and/or the like, said system including first and at least a second device, said devices each including at least one clamp means and at least one shoe means where at least part of the shoe means is positioned and/or secured substantially between the clamp means and the article in use and at least part of the device includes an extension member and/or is adapted to be connected to an extension member in use wherein the shoe means includes at least one channel or recess.

Preferably the article is a wheelchair.

In a further aspect of the invention there is provided a device for extending and/or providing one or more handles to an article in use, said device including an attachment means and an extension member wherein the attachment means is attached to at least a portion of the article and the extension member extends therefrom in at least one direction.

In a yet further aspect of the invention there is provided a method of transporting or moving one or more articles using a device, said device including at least one clamp means and at least one shoe means where at least part of the shoe means is positioned and/or secured substantially between the clamp means and the article in use and wherein at least part of the device includes an extension member and/or is adapted to be connected to an extension member in use, said method including the steps of;
- attaching the device to at least a portion of an article using said clamp means; and
- using said extension member to move and/or manoeuvre said article in use.

In a yet further embodiment of the invention there is provided a method of using an apparatus, said apparatus including at least one clamp means and at least one shoe means where at least part of the shoe means is positioned and/or secured substantially between the clamp means and the article in use and at least part of the device includes an extension member and/or is adapted to be connected to an extension member in use, said shoe means includes at least one channel or recess wherein said channel or recess includes one or more formations and/or a substantially planar surface, said method including the step of positioning at least part of an article substantially in and/or adjacent to the channel or recess and securing a clamp means around the same.

Typically the presence of the one or more formation and/or a substantially planar surface prevents the apparatus from being rotated and/or moved away from a predetermined or preselected position on the article.

Specific embodiments of the device and use thereof are now described with reference to the following figures, wherein:
Figure 1 shows a perspective view of a device in accordance with one aspect of the present invention;
Figures 2a and 2b show semi-schematic diagrams of the side of a device in use; and
Figures 3a, 3b and 3c show semi-schematic diagrams of one embodiment of the invention.

To overcome the current state of affairs with regard to wheelchair evacuation, the present invention facilitates the conversion of a person's own wheelchair, extemporaneously; without any adaption of the chair required, into a safe and stable evacuation chair thereby eliminating the need for a physical transfer of the evacuee from one device to another and the need to physically carry the wheelchair down or up stairs thus eliminating the need for dangerous manual handling operations.

Further benefits of a wheelchair user being able to remain in their own wheelchair are;
- Many wheelchairs are adapted for the needs of the users with supports for various parts of the body. This is particularly important where a person needs support for the upper body for stability.
- The wheelchair, if abandoned up the stairs, becomes a hazard in the evacuation route for other evacuees and for first responders entering the building.
- The wheelchair, if abandoned up stairs is not available for the safe onward evacuation of the evacuee.

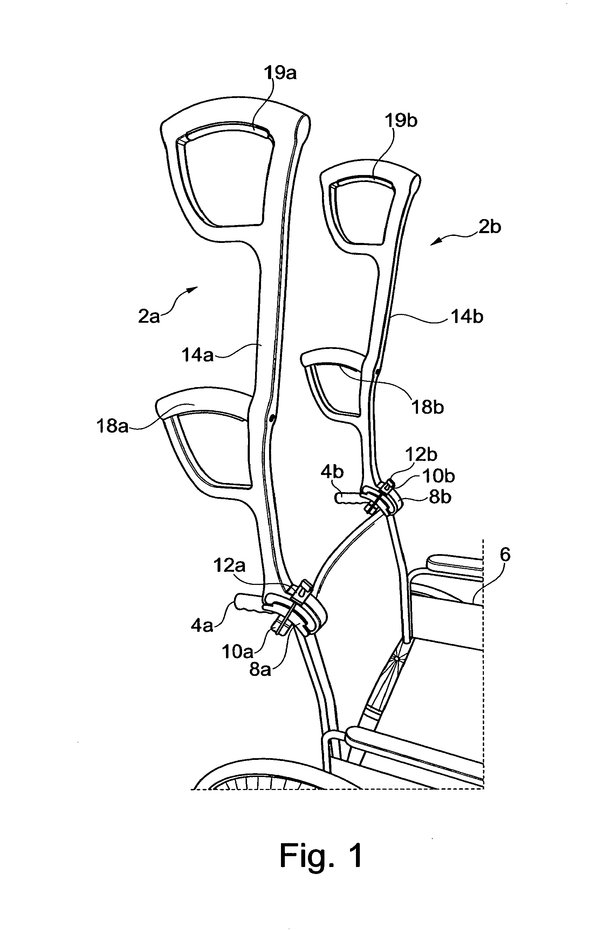

Turning to figure 1 where there is shown one embodiment of a pair of devices 2a, 2b attached to the handles 4a, 4b, or curved portions adjacent to the handles of a wheelchair 6. The device comprises a pair of shoes 8a, 8b which are substantially C or L shaped and which abut and sit on top of the curved stem of the handles 4a, 4b in use. The shoes 8a, 8b are secured in position using adjustable clamps or shackles 10a, 10b that extend or wrap around the handles 4a, 4b. The clamps can be adjusted by tightening or loosening bolts 12a, 12b.

Extending from the shoes 8a, 8b are the extension members or bars 14a, 14b. The extension members also include handle portions 18a, 18b and 19a, 19b positioned at two locations along the length of the same. The handle portions provide a point at which a person can grip device 2 and therefore the wheelchair 6 can be gripped and manoeuvred.

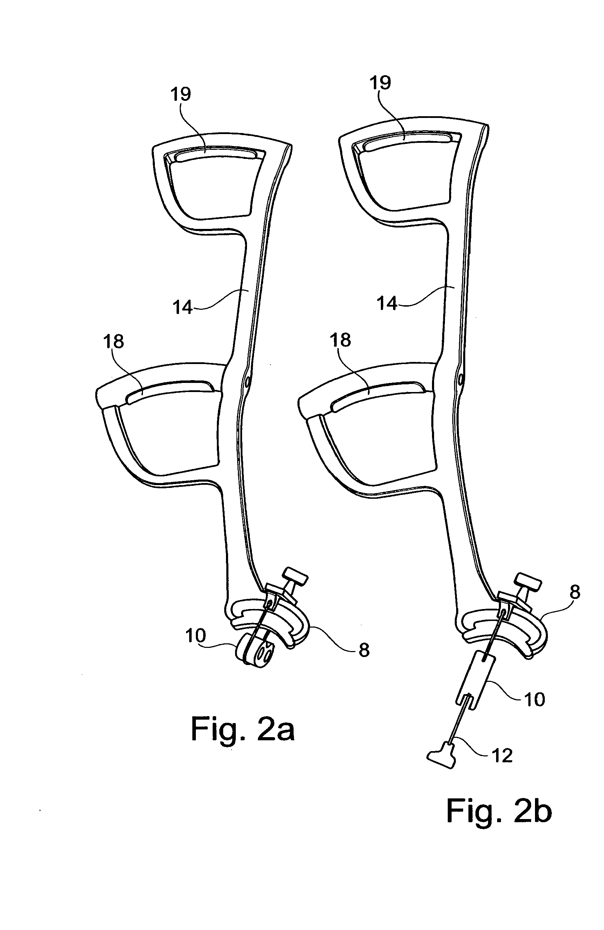

Figure 2a shows a device 2 removed from the wheelchair with the clamp 10 closed and secured. Alternatively, figure 2b shows the clamp 10 in the open position.

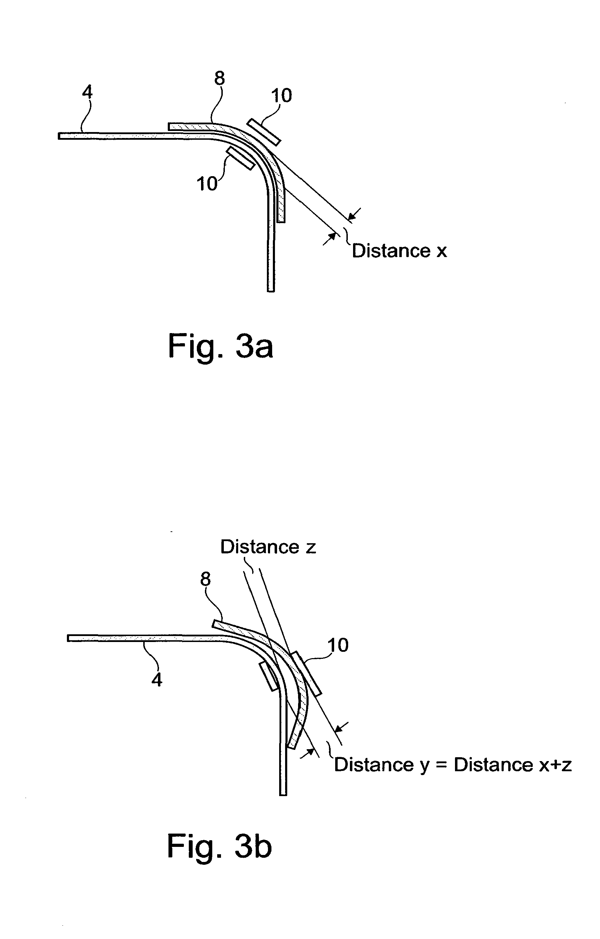

Figures 3a and 3b shows the semi-schematic side views whereby if the clamps 10 are loose, or are not tightly fitted they cannot detach from the curved wheelchair handle due to the fact that it sits on the radius of the curve. As can be seen, as the shoe 8 of the clamp rotates either upwards or downwards, the radius of the shoe 8 is forced away from the radius of the handle significantly increasing the distance between the handle and the shoe. This has the effect of "tightening" the device because the shoe is forced against the clamp 10.

In other words, the central points of the radii of the curves of the handle and the shoe move away from each other by virtue of, when going downwards, the lower portion of the upper radius cannot go other than straight down, and not round a radius. This necessarily means that if the higher portion of the radius is moved outwards, i.e. horizontal, the only distance that can be increased by the rotation is the distance between the centres of each radii. This has the effect of tightening the clamp and is therefore a failsafe mechanism. Physical testing shows that vibratory loosening of the clamp would never be sufficient to cause failure without gross negligence of the operator. Current legislation requires that properly trained "competent" personnel should be available in the event of any evacuation, therefore the situation is highly unlikely to arise without criminal offences being committed.

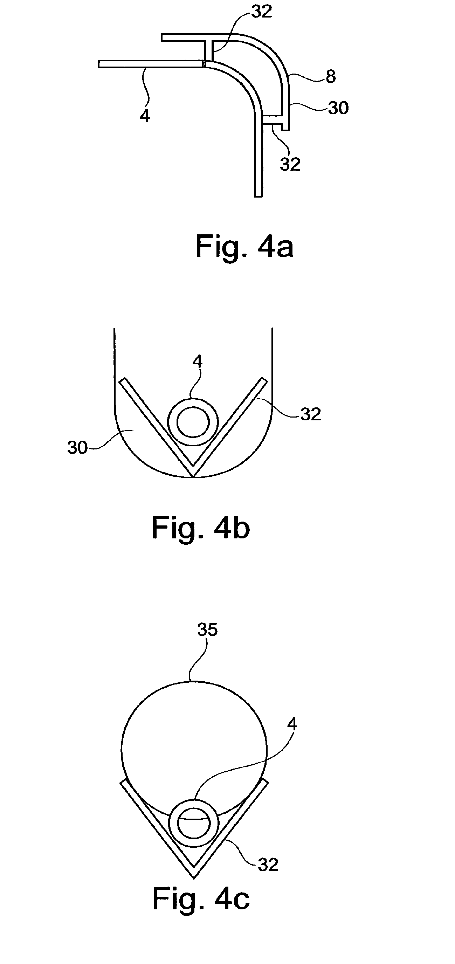

Figure 4a shows an arrangement of formations 32 on the inside of the groove 30 of the shoe that provides a more secure contact between the shoe 8 of the clamp and the round tube forming the 90 degree angle for the handle or other part to which the clamp device 2 is to be attached. Two `V' shapes 32 have been included on the underside of the shoe. These sit at right angles to each other, one making contact with the horizontal part of the tube and the other making contact with the vertical part of the tube.

The position of the `V' shapes, formations or protrusions 32 at right angles to each other prevents any sideways movement of the shoe around the handle 4 as the horizontal force on the lower `V' is attempting to turn the shoe in an arc with the pivotal point of the ark being the vertical (forward) part of the shoe, and the vertical force being applied to the upper `V' is attempting to turn the shoe in an arc with the pivotal point of that arc being the horizontal (upper) part of the shoe. These two forces will prevent any rotational movement of the shoe around the handle.

This effect also applies to handles of different sizes and diameters. This is shown in figures 4b and 4c, wherein it is shown each `V' makes two points of contact with the handle. With two `V' shapes the shoe therefore makes four independent points of contact with the handle.

Figure 4c shows how the `V' shape is a truly universal fit for all diameters of tubes within the range of the chosen `V', where a larger diameter handle 35 is shown alongside a smaller handle. The restricted turning effect is nevertheless present.

## Claims

1. A device for attaching at least one extension member to an article, said device including at least one clamp means and at least one shoe means where at least part of the shoe means is positioned and/or secured substantially between the clamp means and the article in use and at least part of the device includes an extension member and/or is adapted to be connected to an extension member in use, said shoe means includes at least one channel or recess wherein said channel or recess includes one or more formations and/or a substantially planar surface.

2. A device according to claim 1 wherein the formations reduce or at least narrow in part the width and/or diameter of the channel or recess.

3. A device according to claim 1 wherein the formations are indentations.

4. A device according to claim 3 wherein the indentations are substantially V-shaped.

5. A device according to claim 1 wherein the formations comprise at least a pair of indentations and/or planar surfaces substantially arranged at an angle to one another to form a V-shape.

6. A device according to claim 1 wherein the channel or recess is substantially cylindrical, semi-cylindrical and/or U-shaped.

7. A device according to claim 6 wherein at least a portion of the channel or recess is V-shaped.

8. A device according to claim 1 wherein the channel or recess includes at least one U-shaped portion and at least one V-shaped portion.

9. A device according to claim 1 wherein the article is a wheelchair.

10. A device according to claim 1 wherein the extension member is an extension piece or pole which can be used as a handle or handle extension.

11. A device according to claim 9 wherein the device is attached to the portion of the wheelchair adjacent to the handle and the extension member extends from the wheelchair in an upward direction.

12. A device according to claim 11 wherein at least the channel or recess portion of the shoe means is shaped to conform with and/or follow the shape of at least part of the handle stem, curved knuckle portion and/or substantially adjacent to the handle portion.

13. A device according to claim 12 wherein the channel or recess is substantially L-shaped.

14. A device according to claim 1 wherein the clamp means and shoe means are attached or integrally formed together.

15. A device according to claim 14 wherein the clamp means and shoe means are formed together such that the device is provided as a single unit or unitary body.

16. A method of transporting or moving one or more articles using a device, said device including at least one clamp means and at least one shoe means where at least part of the shoe means is positioned and/or secured substantially between the clamp means and the article in use and wherein at least part of the device includes an extension member and/or is adapted to be connected to an extension member in use, said method including the steps of;
- attaching the device to at least a portion of an article using said clamp means; and
- using said extension member to move and/or manoeuvre said article in use.
